# EUROPÄISCHE PATENTANMELDUNG

(11) **EP 3 319 190 A1**
(43) Veröffentlichungstag der Anmeldung: **09.05.2018**
(21) Anmeldenummer: 17199992.3
(22) Anmeldetag: 03.11.2017
(51) Int. Cl.: H02G 1/02

(54) **LEITUNGSFAHRWAGEN SOWIE MONTAGESYSTEM ZUR AUTONOMEN MONTAGE VON ARMATUREN AN FREILEITUNGEN**

(30) Priorität: 04.11.2016 DE 102016221701
(71) Anmelder: Richard Bergner Elektroarmaturen GmbH & Co. KG, 01445 Radebeul (DE)
(72) Erfinder: BAUER, Andreas, 91785 Pleinfeld - Stirn (DE); MURR, Manfred, 91522 Ansbach (DE)
(74) Vertreter: FDST Patentanwälte

(57) **Zusammenfassung**

Um eine autonome Montage von Armaturen (16) an einer Freileitung (10) zu ermöglichen, ist ein Montagesystem vorgesehen, welches einen speziell ausgebildeten Leitungsfahrwagen (2) sowie ein Fluggerät (Drohne) (46) umfasst, die jeweils zum autonomen Befestigen von Armaturen (16) an einem Seil (8) der Freileitung (10) ausgebildet sind. Der Leitungsfahrwagen (2) weist dabei neben einem Fahrgestell (4) eine Montageeinheit (20) auf, welche insbesondere elektrisch ausgebildet ist und die über eine eigene als Generator ausgebildete Energieversorgungseinheit (22) mit Strom versorgt wird. Die Manipulatorhand (30) dient insbesondere sowohl zum Greifen als auch zum Befestigen der Armaturen (16) an den Seilen (8). Das autonome Fluggerät (46) weist einen fest montierten Greifarm (48) speziell mit integrierter Schraubeinheit (50) zur Befestigung der Armatur (16) an der jeweiligen Befestigungsklemme (18) auf.

## Beschreibung

Die Erfindung betrifft einen Leitungsfahrwagen sowie ein Montagesystem zur autonomen Montage von Armaturen und Freileitungen.

Bei Freileitungen zur elektrischen Energieübertragung (Überlandleitung) werden üblicherweise zwischendurch durch Masten gebildete Abspannpunkte Freileitungsseile gespannt. Die Freileitungsseile sind insbesondere Leiterseile zum Transport von elektrischem Strom, können daneben aber auch als Datenleitungen ausgebildet sein. Üblicherweise ist am höchsten Punkt ein Erdungsseil gespannt. Die Abspannpunkte sind oftmals mehrere 100 Meter voneinander beabstandet. Aufgrund dieses großen Abstandes ist es erforderlich, dass an den Seilen der Freileitungen unterschiedliche Armaturen angebracht werden müssen. Dabei handelt es sich insbesondere um sogenannte Feldabstandhalter, welche Leiterseile eines sogenannten Bündelleiters in einem definierten Abstand zueinander halten. Daneben werden an derartigen Freileitungsseilen, insbesondere am Erdseil, häufig auch Schwingungsdämpfer oder Signalarmaturen angebracht. Bei diesen handelt es sich beispielsweise um Vogelschutzarmaturen, um die Freileitung für Vögel sichtbar zu machen oder auch um Flugwarnarmaturen wie beispielsweise Flugwarnkugeln.

Diese Armaturen werden dabei regelmäßig mit Befestigungsklemmen an einem jeweiligen Seil der Freileitung angebracht. Aus der WO 2015/117976 A1 sind eine Vielzahl von unterschiedlichen Befestigungsklemmen für eine möglichst einfache und auch automatisierte Montage beschrieben.

Die Montage derartiger Armaturen ist mit einem erheblichen personellen Aufwand verbunden. Da die Freileitungen über freies Feld, Wasser Wald und auch Bebauungsgebieten geführt werden, ist die Zugänglichkeit häufig erschwert.

Aus der WO 2015/117976 A1 sind Konzepte zur autonomen Montage derartiger Armaturen zu entnehmen, bei denen diese mithilfe eines autonomen Fluggerätes oder auch mithilfe eines Schlittens am Freileitungsseil angebracht werden.

Ausgehend hiervon liegt die Erfindung der Aufgabe zugrunde, die autonome Montage von Armaturen an Freileitungen zu vereinfachen.

Die Aufgabe wird gemäß der Erfindung gelöst durch einen Leitungsfahrwagen mit den Merkmalen des Anspruchs 1 sowie durch ein Montagesystem mit dem Merkmal des Anspruchs 15. Bevorzugte Weiterbildungen sind in den Unteransprüchen enthalten.

Der Leitungsfahrwagen dient insbesondere zur Montage von Armaturen, insbesondere von Feldabstandhaltern an der Freileitung, und zwar insbesondere an den Seilen eines Bündelleiters der Freileitung. Grundsätzlich lassen sich mit dem Leitungsfahrwagen auch Seilprüfungen, Montageüberwachungen durchführen, bereits erfolgte Montagearbeiten überprüfen, der Bestand und / oder die Lage von an der Freileitung befestigten Armaturen ermitteln.

Der Leitungsfahrwagen weist dabei ein Fahrgestell auf, welches an der Freileitung zur autonomen Fortbewegung aufgehängt werden kann und das einen Antrieb zur autonomen Fortbewegung umfasst. Weiterhin ist an dem Leitungsfahrwagen eine Montageeinheit angeordnet, welche eine Manipulatorhand zur automatisierten Montage einer Armatur an dem Seil der Freileitung aufweist. Die Montageeinheit weist dabei insbesondere elektrisch antreibbare Stellelemente auf. Schließlich ist am Fahrgestell eine separate Energieversorgungseinheit angebracht. Die Energieversorgungseinheit ist zur Versorgung der Manipulatoreinheit mit elektrischer Energie ausgebildet. Neben der Manipulatoreinheit werden vorzugsweise auch weitere Komponenten, wie Sensoren, Kameras oder auch eine Seilwinde mit elektrischer Energie versorgt werden.

Alternativ zur Anordnung einer separaten Energieversorgungseinheit am Fahrgestell selbst erfolgt eine Energieversorgung über eine Basisstation und zwar kabelgebunden. Ein Versorgungskabel wird daher von der am Boden befindlichen Basisstation zum Leitungsfahrwagen geführt und von diesem bei dessen Fortbewegung mitgeschleppt. Daneben werden vorzugsweise auch Daten für die Bedienung und Überwachung übertragen werden.

Unter Basisstation wird allgemein eine am Boden befindliche Einheit verstanden, die wahlweise oder in Kombination ein Überwachungssystem, ein Bediensystem, ein Anbringungssystem, ein Transportsystem für den Leitungsfahrwagen sowie Nachrüstungen für die Montagegeräte aufweist. Das Anbringungssystem ist z.B. eine Seilwinde, über die der Leitungsfahrwagen an die Freileitung angehoben werden kann. Die Seilwinde ist beispielsweise auf einem Transporter angebracht. Weiterhin kann die Basisstation ein Einbringungssystem zur Befestigung der Montageeinheit am Leitungsfahrwagen aufweisen. Eine derartige Basisstation ist dem Leitungsfahrwagen typischerweise allgemein zugeordnet, unabhängig von dessen spezieller Ausgestaltung.

Der Leitungsfahrwagen ist insgesamt zur vollständig autonomen Montage der Armaturen ohne Personenmitführung ausgebildet. Hierunter wird also verstanden, dass an der Freileitung mehrere Armaturen sukzessive mit Hilfe des Leitungsfahrwagens befestigt werden, ohne dass - wie dies heutzutage üblich ist - Personen am Leitungsfahrwagen mitfahren. Der Leitungsfahrwagen weist dabei üblicherweise mehrere Laufrollen auf, mit denen er an zumindest einem, vorzugsweise mehreren Freileitungsseilen angehängt ist. Weiterhin ist der Leitungsfahrwagen vorzugsweise auch für eine sogenannte autonome Mastüberwindung ausgebildet. D. h. der Leitungsfahrwagen kann selbsttätig von einer Seite eines Abspannpunktes auf die andere Seite wechseln. Hierzu weist er beispielsweise sogenannte Hebearme auf, die den Abspannpunkt umgreifen können, sodass der Leitungsfahrwagen autonom von der einen Seite zu der anderen Seite eines Abspannpunktes (Mast) umgesetzt werden kann. Für die Mastüberwindung werden die Hebearme beispielsweise hydraulisch aktiviert.

Das Fahrgestell ist dabei häufig nach Art eines Gerüstes oder Käfig ausgebildet mit einer Vielzahl von Streben, die üblicherweise einen Innenraum einschließen.

Vorliegend wird der Begriff "Leitungsfahrwagen" allgemein für selbstfahrende Fahrgestelle verwendet, die jeweils eine Manipulatoreinheit tragen. Hierunter fallen allgemein daher auch sogenannte Laufkatzen oder Schlitten. Bevorzugt ist jedoch ein Leitungsfahrwagen im engeren Sinne, wie er zuvor beschrieben wurde, und der insbesondere auch zur Mastüberwindung ausgebildet ist.

Für die autonome Montage der Armatur ist der Leitungsfahrwagen mit der nach Art eines Manipulators ausgebildeten Montageeinheit ausgebildet, welche über eine Energieversorgung versorgt wird. Durch die Energieversorgungseinheit wird der besondere Vorteil einer unabhängigen Energieversorgung für die Montageeinheit geschaffen, so dass diese für die erforderlichen Montageschritten geeignet ausgebildet werden kann.

Die Montageeinheit umfasst dabei die Manipulatorhand. Diese dient allgemein zum Greifen einer Armatur und/oder weist eine Befestigungseinheit zum Befestigen einer Befestigungsklemme der Armatur an dem Freileitungsseil auf. Durch die Integration der Montageeinheit und des Leitungsfahrwagens zusammen mit der der zugeordneten Energieversorgungseinheit für die Montageeinheit ist insgesamt eine eigenständige Montage-Baueinheit ausgebildet, durch die die autonome Montage ermöglicht ist.

Bei der Energieversorgungseinheit handelt es sich dabei vorzugsweise um einen Stromgenerator, insbesondere mit einem Verbrennungsmotor zur Erzeugung von elektrischer Energie, die dann für die Stellelemente der Montageeinheit herangezogen wird. Durch die autonome Energieversorgung ist ein zuverlässiger und dauerhafter Betrieb gewährleistet. Über den Stromgenerator lassen sich dabei auch hohe Leistungen bereit stellen. Der Stromgenerator selbst ist wiederum üblicherweise mit einem Kraftstofftank versehen. Der eigentliche elektrische Generator wird allgemein von dem Motor, insbesondere Verbrennungsmotor angetrieben. Alternativ zu dem Stromgenerator besteht auch die Möglichkeit, Batterien als Energieversorgungseinheit für die elektrischen Stellelemente bereitzustellen. Aufgrund der geringen Leistungsdichte von Batterien werden diese bevorzugt bei kleineren Anwendungen mit geringeren Traglasten eingesetzt.

In einer bevorzugten Weiterbildung dient dieser Motor ergänzend - neben dem Antrieb des Generators zur Stromerzeugung - auch zum Antrieb einer hydraulischen Komponente, wie beispielsweise eine Pumpe, um einen erforderlichen Hydraulikdruck bereitzustellen und um hydraulische Komponenten anzusteuern. Eine Steuerung steuert dabei vorzugsweise, wann der elektrische Generator angetrieben wird und wann die zumindest eine hydraulische Komponente betätigt wird. Der Motor ist daher mit zwei unterschiedlichen Teilsystemen- einem elektrischen und einem hydraulischen - verbunden. Der Leitungsfahrwagen weist daher vorzugsweise auch ein Hydrauliksystem mit mehreren hydraulisch betätigbaren Komponenten auf.

Bei der Montageeinheit selbst handelt es sich dabei zweckdienlicherweise um einen Mehrachsroboter. Hierunter wird allgemein ein mit mehreren Gelenkarmen versehenes Handhabungsgerät verstanden, bei dem die einzelnen Gelenkarmen oder Glieder gelenkig miteinander verbunden sind. Durch die Ausgestaltung als Mehrachsroboter besteht der besondere Vorteil, dass sehr viele Bewegungsfreiheitsgrade bestehen, sodass auch komplexe Bewegungsvorgänge ausgeführt werden können. Zweckdienlicherweise wird hierbei auf im Handel übliche Mehrachsroboter zurückgegriffen, welche also am Fahrgestell montiert werden. Die Manipulatorhand ist dabei durch ein an einer Roboterhand befestigtes Montage- oder Greiferwerkzeug gebildet. Die Manipulatorhand ist dabei - durch die mehreren Freiheitsgrade (translatorische sowie rotatorische)- frei im Raum beweglich.

Die Manipulatorhand selbst ist dabei zweckdienlicherweise sowohl zum Positionieren der Armatur an dem Seil als auch zur Befestigung der Armatur an der vorgesehenen Position ausgebildet. Das Positionieren erfolgt mithilfe eines Greifers und das Befestigen mithilfe einer Befestigungseinheit. Über diese wird ein Befestigungsmechanismus einer jeweiligen Befestigungsklemme betätigt. Zweckdienlicherweise handelt es sich bei der Befestigungseinheit um eine Schraubeinheit und die Befestigungsklemme wird mittels Schrauben an dem jeweiligen Freileitungsseil befestigt.

Das Fahrgestell weist weiterhin einen Aufnahmeraum für einen Satz an Armaturen auf und die Montageeinheit ist zum Greifen einer jeweiligen Armatur aus diesem Satz aus Armaturen ausgebildet. Im Fahrgestell selbst werden daher mehrere Armaturen bevorratet, welche dann sukzessive an der Freileitung angebracht werden. Die Armaturen werden dabei insbesondere innerhalb des Fahrgestells aneinandergereiht angeordnet.

Weiterhin ist am Fahrgestell gemäß einer bevorzugten Weiterbildung eine Seilwinde angebracht, über die jeweils der Satz an Armaturen in den Aufnahmeraum gebracht werden kann. Über die Seilwinde wird daher beispielsweise der Satz an Armaturen vom Boden oder von einem LKW angehoben und in den Aufnahmeraum des bereits an der Freileitung angebrachten Leitungsfahrwagens angehoben. Alternativ wird der Aufnahmeraum (Magazin) beispielsweise von einem Mast, insbesondere Abspannmast aus aufgefüllt, beispielsweise durch einen Monteur. Der Leitungsfahrwagen fährt hierzu zum Auffüllen autonom an den Abspannmast.

Zweckdienlicherweise wird dabei der Leitungsfahrwagen selbst auch mithilfe der Seilwinde bzw. einer Seilwinde vom Boden an die Freileitung hochgezogen und dort angebracht. Bei der autonomen Anbringung mithilfe der Seilwinde wird beispielsweise ein Seil mithilfe beispielsweise eines Wurfgeräts über das Freileitungsseil geworfen, bodenseitig befestigt, sodass die Seilwinde durch Einziehen des Seils den Leitungsfahrwagen nach oben ziehen kann.

Vorzugsweise ist hierfür eine spezielle Hilfsarmatur vorgesehen, die eine Umlenkrolle für ein Seil der Seilwinde aufweist. Die Hilfsarmatur ist dabei speziell zum reversiblen Einhängen an die Freileitung ausgebildet. Sie weist hierfür bevorzugt einen Umlenkrahmen auf, in dem die Umlenkrolle befestigt ist. Der Umlenkrahmen hat vorzugsweise mehrere beispielsweise klauenartige Einhängpunkte, mit der die Hilfsarmatur von oben auf ein jeweiliges Seil eingehängt wird. Die Hilfsarmatur wird beispielsweise mit einem Fluggerät oder auch durch Personal am Mast auf das Seil, beispielsweise auf einen Bündelleiter eingesetzt. An der Hilfsarmatur ist bevorzugt ein Vorseil befestigt, welches dazu dient, das eigentliche Windenseil durch die Umlenkrolle zu ziehen, so dass die Hilfsarmatur als Anschlagpunkt für die Anbringung des Leitungsfahrwagens wirkt. Für die Demontage kann das Windenseil wieder mit dem Vorseil entfernt werden und die Halterung mit dem Fluggerät oder durch einen Monteur entnommen werden. Für die unterschiedlichen Leitungsanordnungen sind verschiedene Ausführungen für die Umlenkrahmen vorgesehen, die auch an die unterschiedlichen Abstände der Seile der Freileitung angepasst werden können.

Alternativ wird der Leitungsfahrwagen mit Hilfe eines autonomen Fluggerätes oder mit Hilfe eines Kranwagens an der Freileitung angebracht. Bevorzugt ist vorgesehen, dass der Leitungsfahrwagen autonom am Freileitungsseil angebracht wird, dass also auch hierfür am Leitungsfahrwagen selbst keine Personen mitfahren müssen. Insgesamt wird dadurch ein vollständig autonomes Handling für die Befestigung von Armaturen erreicht. Einflussmaßnahmen durch Personen erfolgen dabei ausschließlich vom Boden beispielsweise durch eine geeignete Fernsteuerung des Leitungsfahrwagens und/oder des autonomen Fluggerätes.

Das Anbringen des Leitungsfahrwagens an der Freileitung wird vorzugsweise weiterhin von der Montageeinheit (mit Greifer), insbesondere Roboter, zumindest unterstützt. Alternativ oder ergänzend dient die Montageeinheit auch zur Nachversorgung mit den Armaturen, um z.B. den Aufnahmeraum (Magazin) wieder aufzufüllen.

Die speziell als Mehrachsroboter ausgebildete Montageeinheit ist vorzugsweise außenseitig am Fahrgestell an einer Befestigungsplattform befestigt, beispielsweise frontseitig, also in oder entgegen der Längsrichtung oder Fahrrichtung oder auch seitlich. Die Befestigungsplattform und damit der Mehrachsroboter bzw. die Montageeinheit ist dabei bevorzugt oberhalb des Aufnahmeraums der Armaturen angebracht.

Der Aufnahmeraum ist allgemein vorzugsweise unterhalb der Freileitungsseile angebracht. Dies begünstigt die Schwerpunktverlagerung nach unterhalb der Freileitungsseile und gewährleistet somit ein stabiles Aufhängen des Leitungsfahrwagens.

Alternativ zu der außenseitigen Anordnung des Mehrachsroboters kann dieser auch innerhalb des Fahrgestells jedoch vorzugsweise oberhalb des Aufnahmeraums angeordnet sein.

In allen Anwendungsfällen greift der Mehrachsroboter eine jeweilige Armatur aus dem Aufnahmeraum und hebt diese an die Freileitungsseile an.

Speziell bei der Ausgestaltung der Armatur als Feldabstandhalter weist die Armatur mehrere Befestigungsklemmen auf, wobei jeweils eine Befestigungsklemme zur Befestigung an einem jeweiligen Leiterseil eines Bündelleiters dient. Eine derartige Armatur weist dabei typischerweise einen Rahmen auf, an dessen Eckpunkte die Befestigungsklemmen angebracht sind.

Speziell bei der außenseitigen Anordnung des Mehrachsroboters ist dieser zur seitlichen Entnahme einer jeweiligen Armatur aus dem Fahrgestell und zur Positionierung an der Freileitung außerhalb des Leitungsfahrwagens ausgebildet. Die Armatur wird daher aus dem Innenraum des Leitungsfahrwagens herausgeführt und an die Freileitung verbracht.

Alternativ, insbesondere bei einer innenliegenden Anordnung der Montageeinheit, wird die Armatur jeweils lediglich beispielsweise aus dem Aufnahmeraum angehoben und an die Freileitung hochgehoben und dann befestigt.

Alternativ zu der Ausgestaltung der Montageeinheit als Mehrachsroboter besteht auch die Möglichkeit, diese als Lineareinheit auszubilden. Speziell bei der Anordnung der Montageeinheit im Inneren ist dies eine geeignete Variante. In diesem Fall wird beispielsweise lediglich die Armatur linear aus dem Aufnahmeraum nach oben angehoben und an die Leiterseile verbracht.

Gemäß einer zweckdienlichen Weiterbildung sind mehrere Montagemodule vorgesehen, die jeweils eine Montageeinheit aufweisen, wobei die Montagemodule jeweils spezifisch an unterschiedliche Typen von Armaturen angepasst sind. Die Montagemodule sind dabei austauschbar am Fahrgestell zu befestigen. Je nach Armatur-Typ werden daher eine Armatur-spezifische Montageeinheit sowie beispielsweise auch ein Armatur-spezifischer Aufnahmeraum bereitgestellt. Hierdurch lässt sich das Montagemodul individuell an eine jeweilige Armatur anpassen. Dies ist bei großen Stückzahlen an identischen Armaturen von Vorteil. Insbesondere kann die Manipulatoreinheit einfach ausgebildet sein, da sie lediglich auf einen Armatur-Typ ausgelegt sein muss. Speziell die zuvor erwähnte Lineareinheit ist eine solche auf einen speziellen Armatur-Typ ausgelegte Montageeinheit.

Alternativ hierzu ist der Leitungsfahrwagen universell für alle Armatur-Typen ausgebildet, die für die Freileitung gewünscht sind, also insbesondere für Feldabstandhalter, Signalarmaturen und Schwingungsdämpfer.

Zweckdienlicherweise ist die Montageeinheit weiterhin mittig zwischen dem Aufnahmeraum für den Satz der Armaturen und der Energieversorgungseinheit oder mittig zusammen mit der Energieversorgungseinheit zwischen zwei gegenüberliegenden Aufnahmeräumen angebracht. In der Mitte kann dabei weiterhin auch die Winde Montageeinheit angebracht sein. Insgesamt ist der Leitungsfahrwagen symmetrisch ausgebildet, um eine optimale Last- und Gewichtsverteilung zu erzielen. Daneben erlaubt die Symmetrie, insbesondere Spiegelsymmetrie bezüglich einer mittleren Vertikalebene, einen Betrieb und die Durchführung der automatischen Montagearbeiten in beide Fahrrichtungen.

Weiterhin ist dem Leitungsfahrwagen eine Steuereinheit zugeordnet. Diese ist allgemein zur Steuerung des Leitungsfahrwagens und / oder der Manipulatoreinheit ausgebildet. Ergänzend ist sie bevorzugt auch zur Erstellung eines Protokolls der Montage der einzelnen Armaturen ausgebildet. Hierzu wird über die Steuereinheit die Position der jeweiligen Armatur an der Freileitung erfasst, speziell GPS-unterstützt. Diese Position wird insbesondere auch im Zusammenhang mit dem jeweiligen Armaturen-Typ, gegebenenfalls mit einer individuellen Kennziffer für die jeweilige Armatur, protokolliert und abgespeichert.

Bei der Montage der Armaturen insbesondere an Freileitungen mit mehreren Bündelleitungen ist vorzugsweise eine Gruppe von miteinander gekoppelten Leitungsfahrwägen vorgesehen. Die gekoppelten Leitungsfahrwägen teilen sich eine gemeinsame Komponente, beispielsweise die Energieversorgungseinheit oder die Steuereinheit. Die Leitungsfahrwägen sind hierbei vorzugsweise über Verbindungs- oder Versorgungsleitungen miteinander verbunden.

Somit können beispielweise die gesamte Steuerung und / oder die Energieversorgung für mehrere oder alle Leitungsfahrwägen in nur einem Leitungsfahrwagen untergebracht werden. Jeder Leitungsfahrwagen weist einen Armaturenspeicher und eine Montageeinheit auf, aber nur jeweils ein Leitungsfahrwagen die Stromversorgung beziehungsweise die Steuerung. Über die Verbindungsleitung können dann die Energie und die Befehle übertragen werden. Dies gewährleistet eine Gewichtseinsparung sowie eine optimal abgestimmte Zusammenarbeit der einzelnen Montagegeräte.

Insgesamt zeichnet sich der Leitungsfahrwagen für die autonome Montage der Armaturen durch folgende Merkmale aus:
- Am Fahrgestell ist eine Montageeinheit, speziell ein Mehrachsroboter oder auch eine Lineareinheit befestigt, welche insbesondere sowohl zum Greifen und Positionieren einer jeweiligen Armatur als auch zum Befestigen derselben am Freileitungsseil speziell mittels einer Schraubbefestigung ausgebildet ist,
- Am Fahrgestell ist weiterhin ein Stromgenerator zur Erzeugung von elektrischer Energie für die elektrisch angetriebene Montageeinheit angebracht
- Der Leitungsfahrwagen ist in bevorzugten Ausgestaltungen speziell für ein autonomes selbsttätiges Umsetzen ausgebildet
- Der Leitungsfahrwagen ist selbst für eine autonome Anbringung an der Freileitung ausgebildet
- Die Nachschubversorgung mit Armaturen erfolgt wahlweise über die Seilwinde vom Boden und vorzugsweise alternativ aus der Luft speziell mithilfe eines autonomen Fluggerätes. Speziell im letztgenannten Fall entfällt die Notwendigkeit, einen Fahrweg zum Bereich der Freileitung vorzusehen.

Aus Gewichtsgründen ist nur ein begrenzter Vorrat an Armaturen innerhalb des Leitungsfahrwagens möglich, beispielsweise werden 5 bis 10 Armaturen, speziell bei Feldabstandhaltern bevorratet. Die Anzahl der benötigten Armaturen innerhalb eines Abspannfeldes, also in einem Bereich zwischen zwei Masten liegt -je nachdem um welche Art von Armatur es sich handelt - darüber und beträgt ein Mehrfaches hiervon. Bevorzugt ist allgemein die Anzahl der bevorrateten Armaturen derart bemessen, dass sie für ein jeweiliges Abspannfeld ausreichen. Eine jeweilige Armatur wiegt dabei typischerweise mehrere Kilo, beispielsweise etwa 4 bis 7 Kilo bei Feldabstandhaltern. Bei sonstigen Armaturen (Schwingungsdämpfer, Signalarmaturen) wiegt eine jeweilige Armatur lediglich wenige Kilogramm, beispielsweise 1 - 2 kg.

Der Leitungsfahrwagen wird aufgrund seiner vergleichsweise hohen Tragkraft speziell für die Montage der schwereren Feldabstandhalter eingesetzt.

Die Aufgabe wird erfindungsgemäß weiterhin gelöst durch ein Montagesystem zur autonomen Montage von Armaturen an Freileitungen, welches einen Leitungsfahrwagen sowie ein autonomes Fluggerät aufweist. Der Leitungsfahrwagen ist vorzugsweise wie zuvor beschrieben ausgebildet, kann alternativ jedoch auch anders ausgebildet sein, beispielsweise als einfacher autonomer Montageschlitten. Der Leitungsfahrwagen wird dabei insbesondere zur Befestigung der Feldabstandhalter herangezogen wird. Ergänzend ist das autonomes Fluggerät vorgesehen, welches gemäß einer ersten Variante zur Befestigung von Armaturen an einem Freileitungsseil, insbesondere zur Befestigung von Schwingungsdämpfern oder Signalarmaturen am Erdseil verwendet wird. Das Fluggerät weist dabei einen Greifarm (48) auf, der die zu montierende Armatur (16) halten kann und der eine Befestigungseinheit, insbesondere eine Schraubeinheit (50) zur Betätigung eines Befestigungsmechanismus einer Befestigungsklemme (18) der Armatur (16) umfasst.

Alternativ zu der Kombination des autonomen Fluggeräts mit dem Leitungsfahrwagen, die jeweils selbsttätig die Armaturen sowohl positionieren als auch die Befestigungsklemmen am jeweiligen Seil befestigen, ist bei dem Montagesystem alternativ vorgesehen, die Positionierung sowie die Befestigung der Armaturen aufzuteilen, beispielsweise auf ein Fluggerät und einen autonomen Leitungsfahrwagen, im einfachsten Fall einen Schlitten oder auf zwei Fluggeräte.

Das Fluggerät dient dabei allgemein zur Positionierung oder dem Transport der Armaturen an die Freileitung, insbesondere auch der genaue Positionierung der jeweiligen Armatur am jeweiligen Montageort. Gemäß einer ersten Variante ist hierbei vorgesehen, dass das autonome Fluggerät als Transportgerät ausgebildet ist und ein autonomer Leitungsfahrwagen, im einfachsten Fall ein einfacher kleiner Schlitten, die Montageeinheit trägt. Das Fluggerät platziert die jeweilige Armatur vorzugsweise direkt an dem Montageort. Alternativ deponiert das Fluggerät einen Satz an Armaturen an einer Position und der Schlitten greift eine jeweilige Armatur, verbringt diese an den Befestigungsort, befestigt diese und nimmt anschließend die nächste Armatur auf.

Alternativ dient - bei der Verwendung von zwei Fluggeräten - das eine Fluggerät als Transportgerät und das Andere zur Befestigung am Freileitungsseil. Hierdurch besteht insbesondere die Möglichkeit, am autonomen Fluggerät beispielsweise einen Mehrachsroboter für die Montage anzubringen. Die Aufteilung auf zwei unterschiedlich ausgebildete Fluggeräte erlaubt, kleine Fluggeräte mit geringen Traglasten einzusetzen, die jeweils für die spezielle Funktion (Transport und Positionieren einerseits und Befestigen andererseits) auszubilden.

Das Montagesystem erlaubt eine Abdeckung sämtlicher Anforderungsprofile bei der Montage von Armaturen. In allen Fällen wird zweckdienlicherweise über eine Steuereinheit die Montage protokolliert, wie dies zuvor im Zusammenhang mit dem Leitungsfahrwagen bereits erläutert wurde.

Im Falle der Aufteilung der Positionierung und der Befestigung auf zwei insbesondere unterschiedlich ausgestaltete Fluggeräte weist das Montagesystem vorzugsweise keinen Leitungsfahrwagen auf. Das Konzept der Aufteilung der Positionierung sowie der Befestigung von Armaturen auf zwei Fluggeräte wird als eigenständig erfinderisches Konzept angesehen und die Einreichung einer Teilanmeldung hierauf bleibt vorbehalten.

Auch die Ausgestaltung des Fluggeräts als solches - wie sie sich insbesondere aus der nachfolgenden Beschreibung ergibt - wird als eine eigenständig erfinderisches Konzept angesehen und auch hierauf bleibt die Einreichung einer Teilanmeldung vorbehalten.

Das Fluggerät ist als ein autonomes Fluggerät ausgebildet und dient alternativ oder ergänzend zu der Verwendung eines Leitungsfahrwagens für die Montage einer jeweiligen Armatur an der Freileitung. Aufgrund der üblicherweise beschränkten Tragkraft derartiger autonomer Fluggeräte (Drohnen) wird dieses dabei vorzugsweise lediglich für kleinere Armaturen wie Schwingungsdämpfer oder Signalarmaturen eingesetzt. Diese werden dabei typischerweise an dem sogenannten Erdseil und nicht an einem Leiterseil befestigt, wobei eine Befestigung am Leiterseil ebenfalls möglich ist. Bei dem Erdseil handelt es sich typischerweise um ein Seil, das zwischen den Spitzen der Abspannpunkte abgespannt ist und damit quasi das höchste Seil der Freileitung definiert.

Das Fluggerät weist insbesondere einen Greifarm auf, welcher bei der Montage die zu montierende Armatur hält. Darüber hinaus weist das autonome Fluggerät eine Befestigungseinheit, insbesondere eine Schraubeinheit zur Betätigung eines Befestigungsmechanismus einer jeweiligen Befestigungsklemme der Armatur auf. Alternative Befestigungseinheiten sind ebenfalls möglich, je nach Ausgestaltung der Befestigungsklemmen. Der Greifarm ist dabei vorzugsweise fest mit einem Körper des autonomen Fluggeräts verbunden und ist insbesondere ein steifes Gebilde an dem zumindest eine Armatur gehalten ist. Vorzugsweise ist das autonome Fluggerät lediglich zur einzelweisen Montage einer jeweiligen Armatur ausgebildet und weist keinen Vorrat an Armaturen auf. Hierdurch wird das Gewicht gering gehalten. Alternativ besteht jedoch - je nach Traglast der Drohne - auch die Möglichkeit, mehrere Armaturen zu bevorraten.

In bevorzugter Weiterbildung weist der Greifarm einen Greifer als Manipulatorhand auf, welcher die Armatur hält, wobei der Greifer insbesondere gemeinsam mit dem Greifarm um seine Längsachse rotierbar ist

Weiter Vorzugsweise ist der Greifarm ein steifes Rohr und die Befestigungseinheit ist im Inneren des Rohres angeordnet. Dadurch ist eine sehr kompakte Ausgestaltung erreicht. Am vorderen Rohrende ist bevorzugt der Greifer angeordnet, welcher die Armatur hält und ergänzend auch bezüglich der Befestigungseinheit (Schraubereinheit) gleich derart positioniert, dass ein schnelles Verschrauben der Befestigungsklemme ermöglicht ist.

Bevorzugt wird durch den Greifer die Armatur derart gehalten, dass ein Schraubkopf von der insbesondere als Schraubereinheit ausgebildete Befestigungseinheit beispielsweise durch eine Linearverstellung erreicht wird.

Dieser Greifer ist dabei zweckdienlicherweise um seine Längsachse rotierbar. Hierdurch kann die vom Greifer gehaltene Armatur einem Verlauf des Freileitungsseils angepasst werden, sodass die Armatur immer in der gewünschten Orientierung relativ zum Freileitungsseil angebracht werden kann. Gleichzeitig kann das Fluggerät in der Horizontalen ausgerichtet bleiben.

Der Greifer ist dabei vorzugsweise gemeinsam mit dem Rohr drehbar angeordnet, speziell mit dem Rohr drehfest verbunden. Das Rohr selbst ist drehbar gelagert.

Weiterhin weist der Greifarm in bevorzugter Weiterbildung frontseitig Fangelemente auf, die beispielsweise V-förmig ausgebildet sind. Durch die V-förmige Ausgestaltung wird ein Heranführen an das Freileitungsseil vereinfacht. Diese Fangelemente bilden daher Führungselemente für das Freileitungsseil.

Alternativ zu der Ausgestaltung als eigensteifes Element, insbesondere Rohr, ist der Greifarm als ein Mehrachsroboter ausgebildet. Dieser weist wiederum den Greifer als Manipulatorhand sowie auch die Befestigungseinheit für die Schraubbefestigung auf.

Zweckdienlicherweise ist der Greifarm allgemein lösbar am Fluggerät befestigt, so dass der Greifarm bei Bedarf vom Fluggerät im Betrieb abgeworfen werden kann. Insbesondere ist der Greifarm über eine lösbare Arretierung am Fluggerät befestigt. Die Arretierung lasst sich vorzugsweise aus der Ferne beispielsweise über eine (Funk-) Fernbedienung auslösen. Dadurch ist in Notfällen, wenn sich beispielsweise der Greifer an einem Seil verhakt, eine Notauslösung ermöglicht, so dass das Fluggerät wieder manövrierfähig ist.

Anstelle des Greifarms besteht schließlich auch die Möglichkeit, dass das Fluggerät einen Montageschlitten aufweist, welcher also mit dem Fluggerät verbunden ist, wobei der Montageschlitten am Seil befestigbar und entlang des Seils verfahrbar ist. Bei dieser Ausgestaltung wird der Montageschlitten mithilfe des Fluggeräts an das Seil verbracht. Innerhalb des oder am Montageschlitten ist die Montageeinheit angebracht. Die Vorwärtsbewegung des Montageschlittens entlang des Seils wird dabei in bevorzugter Ausgestaltung ergänzend über das Fluggerät bereitgestellt, d. h. der Montageschlitten selbst weist zweckdienlicherweise keinen eigenen Antrieb auf.

Auch bei dieser Variante ist beispielsweise eine Bevorratung der Armatur am Montageschlitten vorgesehen. Für die Montageeinheit ist vorzugsweise ebenfalls eine Energieversorgungseinheit, speziell ein Stromgenerator mit Verbrennungsmotor angeordnet. Die Montageeinheit ist beispielsweise wiederum ein kleiner Mehrachsroboter, welcher am Montageschlitten befestigt ist. Durch die über den Generator bereitgestellt elektrische Energieversorgung ist wiederum eine elektrische Ausgestaltung der Montageeinheit ermöglicht.

Bevorzugt ist bei der Ausgestaltung mit dem autonomen Fluggerät die Variante mit dem rohrförmigen Greifarm mit der im Greifarm integrierten Befestigungseinheit. Diese Variante ist jeweils nur für die Befestigung und zum Transport einer einzelnen Armatur vorgesehen.

Vorzugsweise weist das Fluggerät ein Messsystem, insbesondere Lasermesssystem, Ultraschallmesssystem oder Bildauswertungs- Verfahren, zur Abstandsmessung auf, über das wahlweise der aktuelle Abstand zu einem Referenzpunkt, insbesondere Abspannmast, ein Abstand zwischen zwei Armaturen oder einer Armatur zum Referenzpunkt ermittelbar ist. Bevorzugt ist weiterhin am Fluggerät GPS-System zur Positionsbestimmung vorgesehen. Ein derartiges Messsystem und / oder GPS-System ist vorzugsweise auch am Leitungsfahrwagen angeordnet.

Ausführungsvarianten werden nachfolgend anhand der Figuren näher erläutert. Diese zeigen jeweils in teilweise vereinfachten Darstellungen:
- Fig. 1A: eine perspektivische Darstellung eines Leitungsfahrwagens an einer Freileitung gemäß einer ersten Variante,
- Fig. 1B, 1C: Vorderansichten des Leitungsfahrwagens gemäß Figur 1A mit einer als Lineareinheit ausgebildeten Montageeinheit in zwei unterschiedlichen Stellungen,
- Fig. 2A: eine perspektivische Darstellung eines Leitungsfahrwagens einer zweiten Variante mit einem im Inneren angeordneten Mehrachsroboter und einer Seilwinde,
- Figur 2B: eine Stirnansicht des Leitungsfahrwagens gemäß der Figur 2A,
- Figur 3A: eine perspektivische Darstellung eines Leitungsfahrwagens gemäß einer dritten Variante
- Figur 4: eine perspektivische Darstellung eines Leitungsfahrwagens einer vierten Variante, bei der ein Mehrachsroboter außenseitig seitlich an einer Befestigungsplattform befestigt ist,
- Figur 5: eine perspektivische Darstellung eines Leitungsfahrwagens einer fünften Ausführungsvariante, bei der ein Mehrachsroboter an einer Befestigungsplattform stirnseitig befestigt ist,
- Figur 6A: eine perspektivische Darstellung eines autonomen Fluggeräts bei der Montage einer Armatur an einem Freileitungsseil,
- Figur 6B: eine vergrößerte Darstellung der Figur 6A im Bereich der am Freileitungsseil angebrachten Armatur,
- Figur 7: ein Fluggerät mit einer Hilfsarmatur zum Einhängen an einen Bündelleiter sowie
- Figur 8: eine Gruppe von miteinander gekoppelten Leitungsfahrwägen.

In den Figuren sind gleichwirkende Teile mit den gleichen Bezugszeichen versehen.

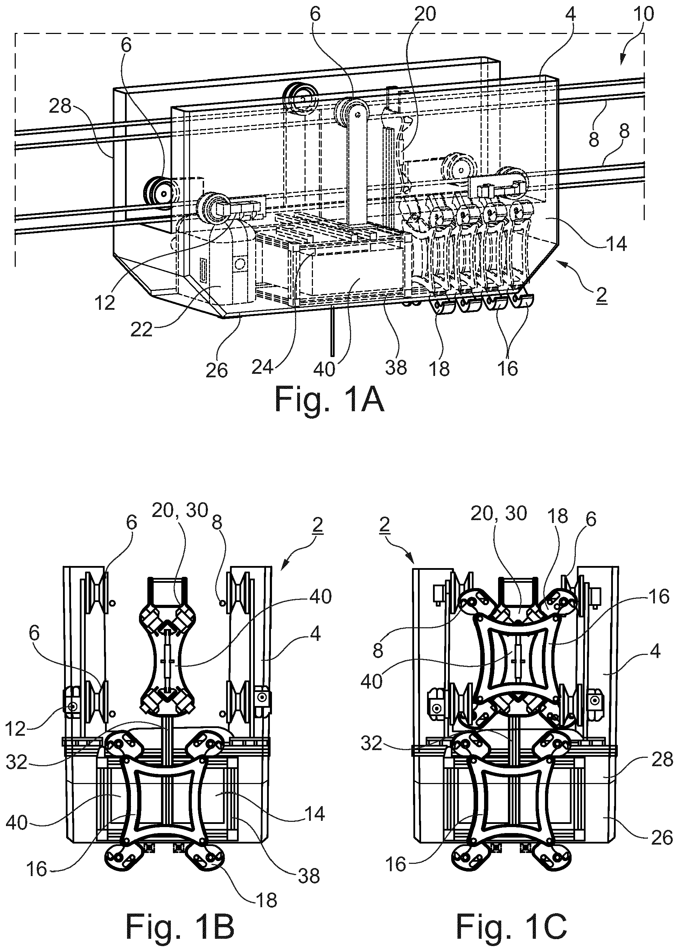

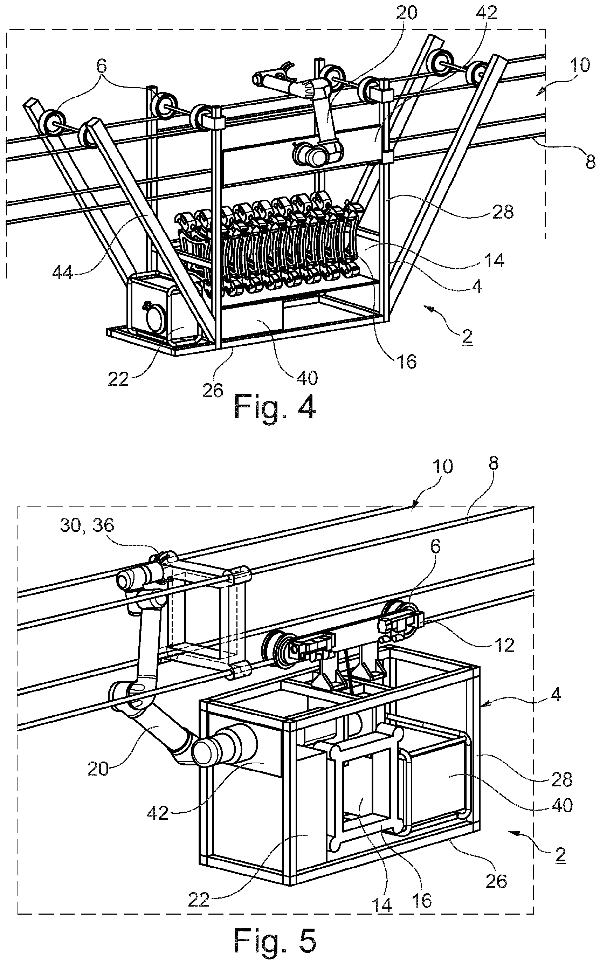

In den Fig. 1 bis 6 sind jeweils Leitungsfahrwägen 2 in unterschiedlichen Varianten dargestellt. Sie zeichnen sich gemeinsam dadurch aus, dass sie ein Fahrgestell 4 sowie mehrere Laufrollen 6 aufweisen. Mit den Laufrollen 6 sind sie jeweils an Seilen 8 einer Freileitung 10 aufgehängt. In den Ausführungsbeispielen handelt es sich bei den Seilen 8 jeweils um vier Leiterseile eines Bündelleiters. Ein Teil der Laufrollen 6 weisen einen Antrieb 12 zur autonomen Fortbewegung des Leitungsfahrwagens 2 entlang der Freileitung 10 auf (Antrieb 12 in Fig. 4 nicht dargestellt). Die in den Figuren 1, 2, 3 sowie 4 dargestellten Leitungsfahrwägen 2 sind für ein autonomes, selbsttätiges Umsetzen an Masten (Mastüberwindung) ausgebildet. Hierzu lassen sich üblicherweise die Laufrollen 6 um eine Drehachse verschwenken und/oder seitlich nach außen versetzen. Systeme zur Mastüberwindung bei Leitungsfahrwägen 2 sind an sich bekannt.

Die Laufrollen 6 sind vorzugsweise über verstellbare Anlenkelemente, beispielsweise teleskopierbar, am Fahrgestell 4 befestigt. Über die verstellbaren Anlenkelemente können beispielsweise die Abstände zwischen den Laufrollen 6 verstellt werden, um diese an unterschiedliche Seilabstände bei unterschiedlichen Freileitungen anzupassen.

Fig. 1B zeigt lediglich zur Illustration die Laufrollen 6 im seitlich nach außen ausgefahrenen Zustand. Die oberen Laufrollen bilden eine Stütz- oder Tragachse aus. Hierüber wird sichergestellt, dass bei Bündelleitern die Bündelleiterabstände beibehalten bleiben. Die unteren Laufrollen 8 sind jeweils mit dem Antrieb 12 ausgestattet.

Sämtliche Leitungsfahrwägen 2 sind weiterhin mit einem Aufnahmeraum 14 versehen, welcher zur Bevorratung eines Satzes an Armaturen 16 ausgebildet ist. Bei den Armaturen 16 handelt es sich vorliegend um Feldabstandhalter. Diese zeichnen sich allgemein durch einen umlaufenden Rahmen aus, welcher an jeder Ecke eine Befestigungsklemme 18 trägt. Im Ausführungsbeispiel weist der Rahmen 4 Eckpunkte für vier Leiterseile auf.

Jeder Leitungsfahrwagen 2 weist weiterhin einen Manipulator auf, welcher eine Montageeinheit 20 bildet. Bei dieser handelt es sich speziell um eine elektrische Montageeinheit, die also elektrisch betätigt wird und hierzu elektrische Stellelemente, insbesondere elektromotorische Antriebe für Linear- oder auch Rotationsbewegungen aufweist. Um die erforderliche elektrische Energie zur Verfügung zu stellen ist weiterhin jeweils eine Energieversorgungseinheit 22 am Fahrgestell befestigt, welche insbesondere als ein Generator ausgebildet ist, welcher mit Hilfe eines Verbrennungsmotors angetrieben wird. Die Energieversorgungseinheit 22 gewährleistet somit eine autonome Energieversorgung für die Montageeinheit 20.

Die in den Fig. 1 bis 5 dargestellten Leitungsfahrwägen sind jeweils für ein vergleichsweise hohe Gesamtgewicht von typischerweise mehreren 100 kg, beispielsweise für 300 - 600 kg ausgebildet, wobei die Ausführungsvariante der Fig. 5 für ein Gesamtgewicht von etwa 200kg und die weiteren Varianten für ein Gesamtgewicht von 300- 600kg ausgebildet sind. Etwa die Hälfte ist das Eigengewicht und die verbleibende Hälfte ist die Traglast für Montageeinheit und die Armaturen.

Die jeweiligen Fahrgestelle 4 der Leitungsfahrwägen 2 sind jeweils in etwa U-förmig ausgebildet, so dass ein Innenraum definiert ist, durch den die einzelnen Seile 8 verlaufen und in dem typischerweise auch der Aufnahmeraum 14 sowie weiteren Komponenten wie Energieversorgungseinheit 22 angeordnet sind.

Die Ausführungsbeispiele der Fig. 1 bis 3 weisen zudem optional eine Seilwinde 24 auf. Mit dieser wird jeweils der Satz an Armaturen 16 von einem Bodenbereich in den Leitungsfahrwagen 2, der an den Seilen 8 aufgehängt ist, hochgezogen und dort zunächst im Aufnahmeraum 14 positioniert.

Bei der Ausführungsvariante der Fig. 1A bis 1C ist die Montageeinheit 20 als eine Lineareinheit ausgebildet. Diese Montageeinheit 20 ist vorzugsweise speziell auf den in den Figuren dargestellten Typ an Armaturen 16 angepasst, ist also lediglich in der Lage, diesen einen Typ an Armaturen zu positionieren und zu befestigen. Alternativ kann auch vorgesehen sein, dass die Montageeinheit auf auch andere Typen an Armaturen 16 umgerüstet werden kann.

Das Fahrgestell 4 weist - ebenso wie in den anderen Ausführungsvarianten der Fig. 1 bis 5 - eine Basis 26 sowie zwei gegenüberliegende Seitenteile 28 auf. Auf der Basis ist die Energieversorgungseinheit 22, die Seilwinde 24, die Montageeinheit 20 angeordnet sowie der Satz an Armaturen 16. Wie aus den Fig. 1A bis 1C zu entnehmen ist, verlaufen die Seile 8 zwischen den beiden Seitenteilen 28 und oberhalb der Basis 26 und damit auch oberhalb der einzelnen Komponenten, wie beispielsweise Energieversorgungseinheit 22 sowie dem Aufnahmeraum 14 mit den darin angeordneten Armaturen 16.

Die Armaturen sind in Längsrichtung, also in Ausbreitungsrichtung der Freileitung 10 mit deren Flachseiten einander angereiht.

Wie insbesondere anhand der Fig. 1B und 1C zu entnehmen ist, ist die Montageeinheit 20 mit einer kombinierten Greif- und Befestigungseinheit versehen, welche allgemein als Manipulatorhand 30 bezeichnet wird. Diese Manipulatorhand ist im Ausführungsbeispiel entlang einer vertikal orientierten Längsführung 32 vertikal von einer unteren Position auf Höhe des Aufnahmeraums 14 in eine obere Position auf Höhe der Seile 8 längsverschiebbar. Die Manipulatorhand 30 weist eine Trägerplatte 34 auf, an der in den im Ausführungsbeispiel vier Eckbereichen jeweils ein Greifer 36 angebracht ist, und mit deren Hilfe die jeweilige Armatur 16 gegriffen werden kann. Im Ausführungsbeispiel weisen die Greifer 36 beispielsweise ausfahrbare Kolben auf. Über diese erfolgt ein Einklemmen der Trägerplatte 34 mit den daran befestigten Greifern 36 an der Armatur 16. Speziell indem beispielsweise ein Kolben eines jeweiligen Greifers 36 radial nach außen ausgefahren wird, so dass das gewünschte Verspannen und damit Greifen der Armatur 16 erfolgt.

Nach dem Greifen der Armatur 16 aus der Vorratsposition im Aufnahmeraum 14 wird die jeweilige Armatur 16 zusammen mit der Manipulatorhand 30 nach oben verfahren. Anschließend werden die Befestigungsklemmen 18 zunächst in das jeweilige Seil 8 eingehängt. Danach erfolgt das Befestigen. Hierzu wird allgemein ein Befestigungsmechanismus der Befestigungsklemme 18 aktiviert. Diese weist allgemein zumindest zwei Klemmarme auf, die zwischen sich das jeweilige Seil 8 einklemmen und mit Hilfe des Befestigungsmechanismus gegeneinander verspannt werden, so dass das jeweilige Seil 8 festgeklemmt ist.

Die Befestigungsklemmen 18 sind hierzu mit einem Verschraubungsmechanismus zum wechselseitigen Verspannen der beiden Klemmarme ausgestattet. Entsprechend weisen die Greifer 36 eine als Schraubeinheit ausgebildete Befestigungseinheit auf. Sie weisen daher jeweils ein Werkzeug auf, welches rotiert und an einem entsprechenden Schraubelement der Befestigungsklemme 18 angreift. Nach erfolgter Befestigung wird das Verspreizen der Greifer 36 an den Befestigungsklemmen 18 gelöst und die Manipulatorhand 30 verfährt wieder in den Ausgangszustand (Parkposition unten). Der Leitungsfahrwagen 2 verfährt an die nächste Montageposition und der Vorgang erfolgt von Neuem.

Für den Fall, dass ein Mast überwunden werden muss, erfolgt eine sogenannte Mastüberwindung des Leitungsfahrwagens 2. Dies erfolgt grundsätzlich in an sich bekannter Weise. Hierzu können die einzelnen Laufrollen 6 seitlich nach außen versetzt werden und üblicherweise auch um eine Drehachse beispielsweise um 90° nach oben verschwenkt werden.

Mittig im Bereich der Seilwinde 24 ist ein Traggestell 38 an weiteren, oberen Laufrollen an den beiden oberen Seilen 8 eingehängt. Am Traggestell 38 ist die Manipulatorhand 30 und insbesondere die Längsführung 32 befestigt. Dieses Traggestell 38 trägt weiterhin eine Steuereinheit 40, welche den Leitungsfahrwagen 2 und insbesondere auch die Manipulatorhand 30 steuert. Grundsätzlich könnte dies auch an einem anderen Ort innerhalb des Leitungsfahrwagens 2 angeordnet sein. Weiterhin ist auch möglich, dass die Steuereinheit 40 nicht Teil des Leitungsfahrwagens 2 ist sondern Steuersignale lediglich über eine signaltechnische (Funk-)Verbindung an die einzelnen Einheiten des Leitungsfahrwagens 2 überträgt.

Vorzugsweise ist allgemein die Steuereinheit 40 Teil des Leitungsfahrwagens 2 und ist vom Boden aus insbesondere kabellos fernsteuerbar. Zur Bedienung sind dabei insbesondere vorprogrammierte Prozessabläufe hinterlegt, die beispielsweise die automatische Befestigung der Armaturen an den Seilen steuern.

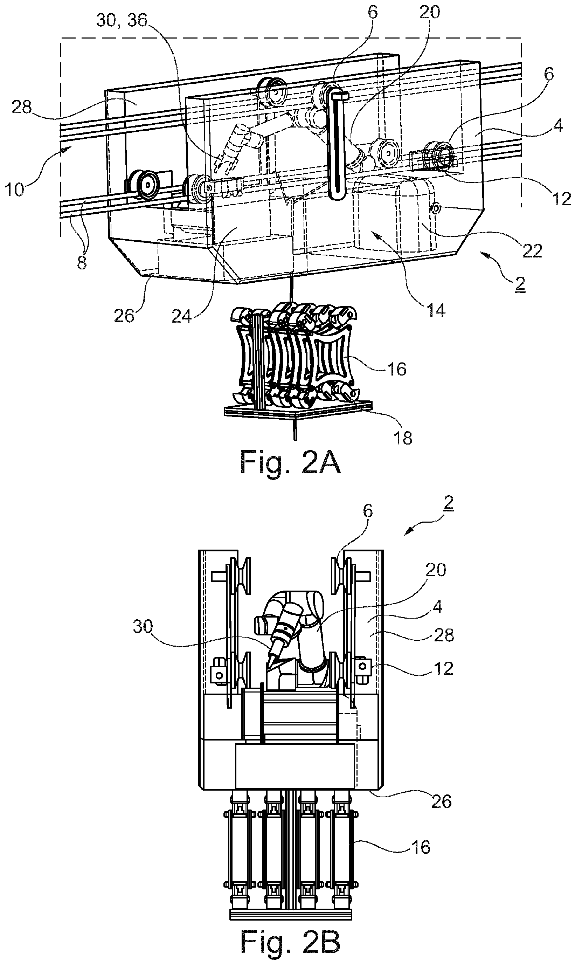

Bei der Ausführungsvariante der Fig. 2 ist das Fahrgestell 4 zunächst ähnlich wie bei der Ausführungsvariante der Fig. 1A ausgebildet. Der entscheidende Unterschied ist darin zu sehen, dass als Montageeinheit 20 ein mehrachsiger Industrieroboter angeordnet ist. Dieser ist im Innenraum zwischen den beiden Seitenteilen 28 angeordnet. Als Manipulatorhand 30 dient hierbei die Roboterhand mit einem entsprechend daran befestigten Werkzeug, speziell Greifer 36.

Ergänzend ist die Roboterhand auch mit einer Befestigungseinheit (Schraubeinheit) ausgebildet für die erforderliche Befestigung der Befestigungsklemmen 18.

Die Fig. 2A zeigt eine Situation, bei der ein Satz von Armaturen 16 über die Seilwinde 24 hochgehoben wird. Diese sind jeweils auf einer Tragplattform angeordnet.

Durch die als mehrachsige Roboter ausgebildete Montageeinheit 20 ist diese flexibel für unterschiedliche Armaturen einsetzbar. Der gesamte Leitungsfahrwagen 2 gemäß dem zweiten Ausführungsbeispiel lässt sich daher für unterschiedliche Armaturen 16 einsetzen.

Die Steuereinheit 40 sowie die Seilwinde 24 sind auf einer Seite auf der Basis 26 und die Energieversorgungseinheit 22 auf der anderen Seite angeordnet. Dazwischen befindet sich der Aufnahmeraum 14. Die Montageeinheit 20 ist oberhalb des Aufnahmeraums 14 angeordnet.

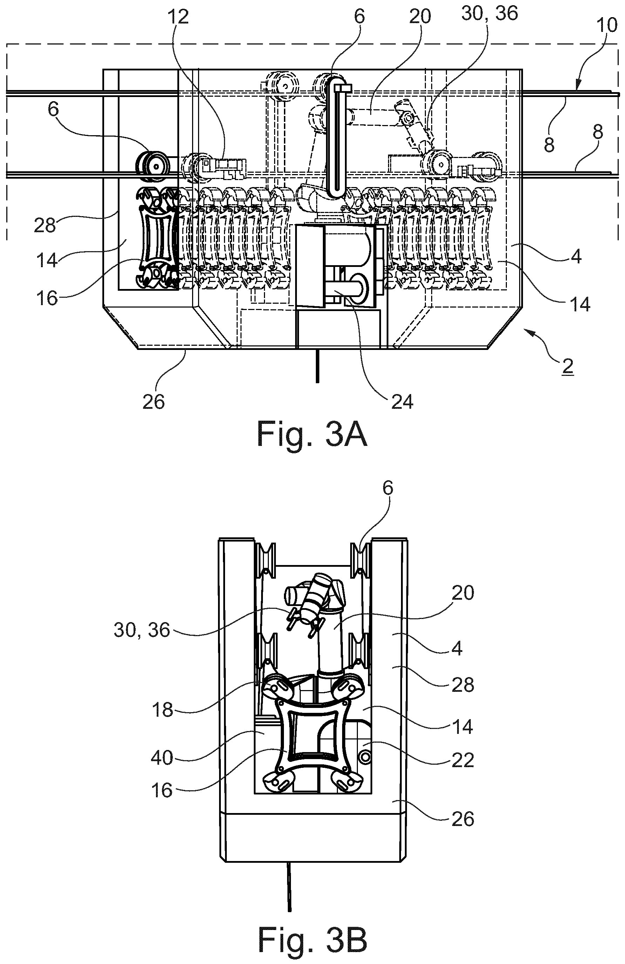

Bei der Ausführungsvariante gemäß den Fig. 3A, 3B ist wiederum als Montageeinheit 20 ein mehrachsiger Roboter vorgesehen. Die Seilwinde 24, die Energieversorgungseinheit 22 sowie die Seilwinde 24 sind mittig angeordnet und beidseitig ist jeweils ein Aufnahmeraum 14 für die Armaturen 16 ausgebildet. Die Montageeinheit 20 ist ebenfalls mittig angeordnet und kann zur Aufnahme der Armaturen nach links bzw. nach rechts greifen.

Mittels des Greifers 36 des mehrachsigen Roboters wird jeweils eine Armatur 16 aus dem Aufnahmeraum 14 gegriffen, an der gewünschten Stelle an den Seilen 8 positioniert und über die Befestigungsklemmen 18 zunächst eingehängt. Anschließend wird die jeweilige Befestigungsklemme 18 durch Schrauben festgeklemmt. Die einzelnen Bewegungsabläufe erfolgen programmgesteuert gegebenenfalls mit Unterstützung über eine Fernbedienung.

Bei der Ausführungsvariante nach Fig. 4 ist das Fahrgestell 4 als ein Gitterrahmen ausgebildet. Das Fahrgestell 4 weist zusätzlich zwei schräg gestellte Hebarme 42 auf, die speziell für die autonome Mastüberwindung vorgesehen sind. Die einzelnen Armaturen 16 sind auf einer Plattform unterhalb der Seile 8 angeordnet. Ergänzend sind auch hier wieder eine Steuereinheit 40 und eine Energieversorgungseinheit 22 vorgesehen. Die Montageeinheit 20 ist wiederum als mehrachsiger Roboter ausgebildet. In diesem Ausführungsbeispiel ist die Montageeinrichtung 20 dabei an einer Befestigungsplattform 42 befestigt, die außenseitig am Fahrgestell 4 und oberhalb der unteren Seile 8 angeordnet ist.

Die Montageeinheit 2 greift jeweils eine zu befestigende Armatur 16, zieht diese zunächst seitlich aus dem Aufnahmeraum 14 heraus, schwenkt diese außerhalb des Fahrgestells 4 nach oben und führt sie von oben zwischen die Seile 8 ein, bis die einzelnen Befestigungsklemmen 18 in den jeweiligen Seilen 8 eingehängt sind. Anschließend erfolgt die Betätigung des Befestigungsmechanismus.

Das in den Fig. 1 bis 3 dargestellte Fahrgestell 4 mit den jeweiligen Laufrollen 6 kann auch mit der Positionierung der Montageeinheit 20 an der Befestigungsplattform 42 und der Anordnung der Armaturen 16 gemäß der Ausführungsvariante nach Fig. 4 kombiniert werden.

Bei der Ausführungsvariante gemäß der Fig. 5 ist das Fahrgestell 4 nach Art eines lediglich an einem Seil 8 aufgehängten Traggestells, insbesondere ein quaderförmiger Gitterrahmen, ausgebildet. Innerhalb des Innenraums des Fahrgestells befinden sich wiederum mehrere Armaturen 16 im Aufnahmeraum 14, die Steuereinheit 40 sowie die Energieerzeugungseinheit 22. Die Montageeinheit 20 ist wiederum ein mehrachsiger Roboter, welcher - ähnlich wie bei der Variante nach Fig. 4 - an einer Befestigungsplattform 42 außenseitig befestigt ist. In diesem Falle stirnseitig. Die Armatur wird wiederum seitlich entnommen und mit Hilfe der Montageeinheit 20 nach vorne verschwenkt, nach oben angehoben und in die Seite 8 eingehängt und dort befestigt, wie zuvor beschrieben.

Für eine Befestigung von Armaturen im Abspannfeld einer Freileitung insbesondere mit mehreren Seilen, insbesondere Bündelleiter ist vorzugsweise eine Gruppe von Leitungsfahrwägen 2 gebildet, die zeitgleich die Montage vornehmen und gemeinsam entlang der Freileitung sich fortbewegen. Die Leitungsfahrwägen 2 sind dabei insbesondere unterschiedlich ausgestaltet, wobei hierzu ein jeweiliger Leitungsfahrwagen 2 eine gemeinsame Komponente, beispielsweise die Energieerzeugungseinheit 20 trägt, die von den weiteren Leitungsfahrwägen 2, die ohne diese gemeinsame Komponente ausgebildet sind, ebenfalls genutzt wird. Die Leitungsfahrwägen 2 sind dabei untereinander beispielsweise mit Versorgungsleitungen etc. verbunden, so dass über diese Versorgungsleitung beispielsweise die Energie übertragen werden kann.

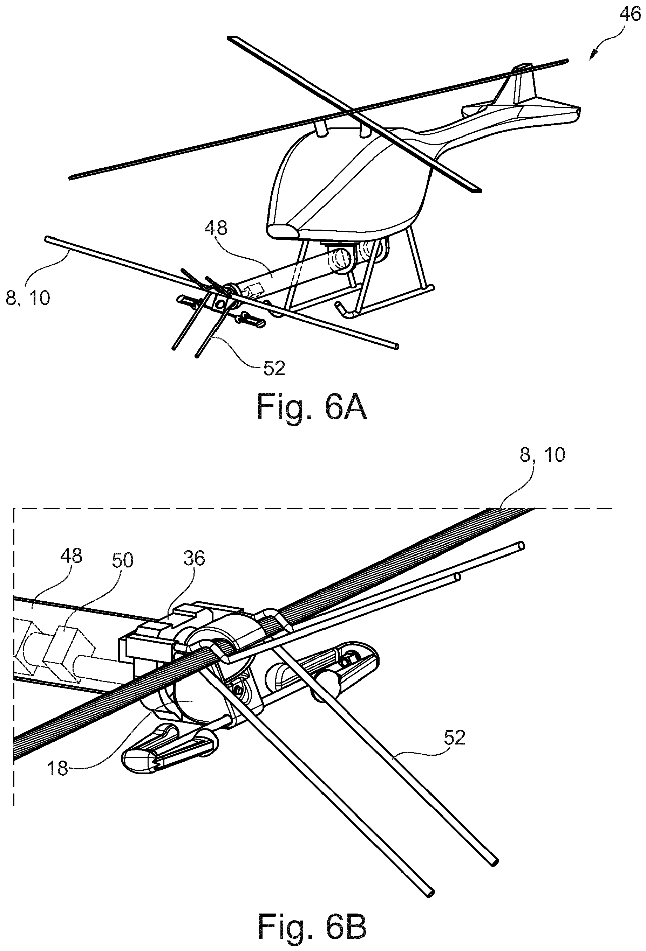

In den Fig. 6a, 6b ist nunmehr eine Ausführungsvariante mit einem autonomen

Fluggerät (Drohne) 46 dargestellt, wobei dieses insbesondere zum Transport und der Montage von jeweils lediglich nur einer Armatur 16 ausgebildet ist. Im Ausführungsbeispiel handelt es sich um einen Schwingungsdämpfer, wie speziell aus der Darstellung nach Fig. 6b hervorgeht.

Das autonome Fluggerät 46 ist dabei beispielsweise vom Boden aus fernsteuerbar über einen entsprechenden Bediener. Grundsätzlich ist auch ein vollautonomes Steuern möglich. Das autonome Fluggerät 46 verfügt insbesondere über entsprechende Sensoren etc. für einen derartigen autonomen Flugbetrieb.

Von besonderer Bedeutung ist weiterhin, dass am Fluggerät 46 ein Greifarm 48 fest montiert ist. Dieser ist an der Unterseite befestigt. Der Greifarm 48 ist dabei vorzugsweise über eine (fern-) auslösbare Arretierung an der Unterseite des Fluggeräts für eine Notentriegelung befestigt. Speziell ist der Greifarm 48 beispielsweise über eine Montageplatte und über lösbare Kupplungselemente mit dem Fluggerät verbunden. Die Montageplatte ist dabei Teil eines Unterbaus für das Fluggerät 46.

Speziell ist der Greifarm 48 als ein Rohr ausgeführt, welches endseitig den Greifer 36 bzw. Halter für die Befestigungsklemme 18 aufweist. Bei dem Greifer 36 handelt es sich insbesondere um einen elektrisch betätigbaren Greifer 36. Im Inneren des Rohres ist die als Schraubeinheit 50 ausgebildete Befestigungseinheit angeordnet, welche zum Verklemmen der beiden Klemmarme der Befestigungsklemme 18 dient. Vorzugsweise ist der Greifarm 48, also insbesondere das Rohr drehbar gelagert, so dass der Greifer 36 um eine Längsachse drehbar ist. Im Ausführungsbeispiel ist das Rohr in den dargestellten Rohrschellen drehbar gelagert.

Für eine zielgerichtete Hinführung der Befestigungsklemme 18 an das Seil 8 weist der Greifarm 48 weiterhin an seinem Vorderende Fangelemente 52 auf. Diese sind dabei als V-förmig aufgebogene Stangen ausgebildet.

Zur Montage einer jeweiligen Befestigungsklemme 18 fliegt das autonome Fluggerät 46 die vorgesehen Position am Seil 8 an, positioniert mit Hilfe der Fangelemente 52 die Befestigungsklemme 18 am Seil 8 und verschraubt anschließend die Befestigungsklemme 18. Anschließend entfernt sich das Fluggerät 46, nimmt an einer Basisstation die nächste Befestigungsklemme 18 auf und wiederholt diesen Vorgang sukzessive.

Alternativ zu der in den Fig. 6a, 6b dargestellten Variante werden von dem Greifarm 48 mehrere Armaturen 18 bereitgestellt und bevorratet. Weiterhin ist das Fluggerät 46 vorzugsweise zur parallelen Montage von mehreren, insbesondere zwei Armaturen 18 ausgebildet. Hierzu weist er beispielsweise zwei Greifer 36 oder auch zwei getrennte Greifarme 48 mit jeweils einem Greifer 36 auf, die nebeneinander an der Unterseite des Fluggeräts 46 befestigt sind. Für eine derartige Doppelmontage ist dabei der Abstand zwischen den beiden Greifern 36 bzw. den beiden Greifarmen 48 vorzugsweise derart gewählt, dass ein gewünschter Abstand zwischen den Armaturen 18; beispielsweise Schwingungsdämpfer, eingestellt ist. Der Abstand ist dabei vorzugsweise einstellbar, also variabel.

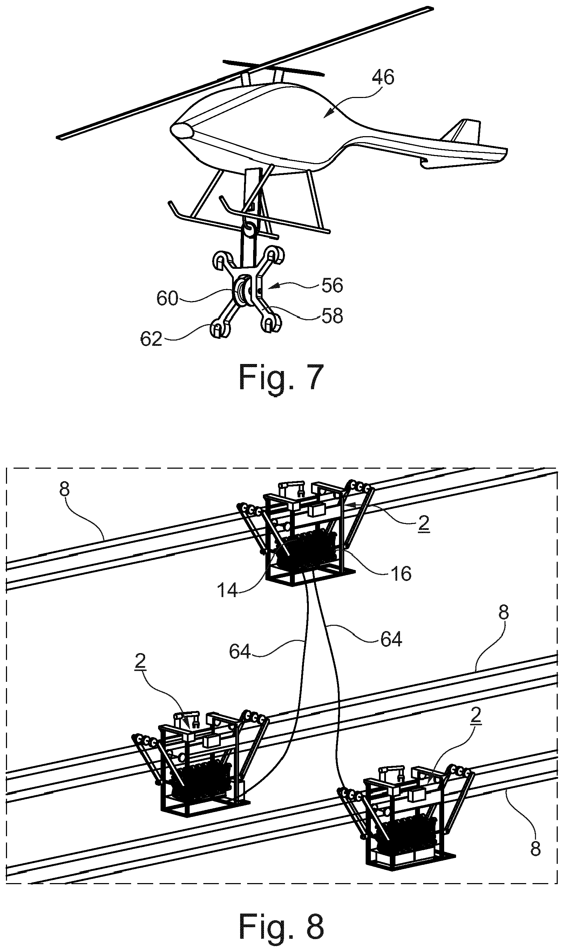

In Figur 7 ist ein Fluggerät 7 dargestellt, welches eine Hilfsarmatur 56 trägt. Die Hilfsarmatur weist einen Umlenkrahmen 58 auf, in dem eine Umlenkrolle 60 befestigt ist. Der Umlenkrahmen 58 ist im Ausführungsbeispiel etwa kreuzförmig ausgebildet und weist in der Mitte die Umlenkrolle 60 auf. An den Ecken des Umlenkrahmens 58 sind jeweils klauenartige Einhängpunkte 62 ausgebildet, die ein jeweiliges Seil 8 umgreifen. Die Hilfsarmatur 56 dient zum Umlenken eines Windenseils einer Seilwinde. Um die Umlenkrolle 60 ist in hier nicht näher dargestellter Weise ein Vorseil befestigt, mit dessen Hilfe das Windenseil hochgezogen werden kann.

Die Hilfsarmatur 56 wird dabei von Unterbau getragen, welcher als Greifer 36 fungiert. Dieser Unterbau kann je nach Anwendung angepasst werden. Speziell ist er - vergleichbar mit der zur Fig. 6A beschriebenen Montageplatte - mit einem Schnelllösemechanismus für eine Notentriegelung ausgestattet.

Figur 8 zeigt eine miteinander gekoppelte Gruppe von Leitungsfahrwägen 2, die untereinander über jeweils eine Verbindungsleitung 64 miteinander verbunden sind. Ein jeder Leitungsfahrwagen 2 ist an einem Bündelleiter befestigt und fährt autonom an diesem zur Montage der Armaturen 16 entlang. Jeder Leitungsfahrwagen 2 weist einen Aufnahmeraum 14 für die Armaturen 16 und eine Montageeinheit 20 auf, aber nur jeweils ein Leitungsfahrwagen 2 weist die Energieerzeugungseinheit 22 bzw. die Steuereinheit 40 auf. Über die Verbindungsleitung 62 können dann die Energie und die Befehle übertragen werden. Beispielsweise ist ein Master-Leitungsfahrwagen 2 ausgebildet, mit dem die weiteren Leitungsfahrwägen 2 über jeweils eine Verbindungsleitung 62 gekoppelt sind.

Im Hinblick auf ein Komplett-Montagesystem weist dieses zur vollständig autonomen Befestigung aller notwendigen Armaturen 16 an einer Freileitung 10 einen Leitungsfahrwagen 2 zur autonomen Montage speziell von Feldabstandhaltern auf, ergänzt um ein derartiges autonomes Fluggerät 46, welches für die Montage von Schwingungsdämpfern oder auch Signalarmaturen herangezogen wird.

Insgesamt ist durch das hier beschriebene Montagesystem insgesamt ein vollautonomes Montieren der Armaturen 16 ermöglicht, ohne dass sich Personal im Bereich des Leitungsfahrwagens befinden muss.

Von besonderer Bedeutung ist das autonome Montagesystem auch bei Ein-Seil-Freileitungen. Hier besteht grundsätzlich ein zusätzliches Sicherheitsrisiko speziell bei älteren Seilen, dass diese reißen. Durch das autonome Montagesystem besteht keine Gefahr für Personen.

### Bezugszeichenliste

- 2: Leitungsfahrwagen
- 4: Fahrgestell
- 6: Laufrolle
- 8: Seil
- 10: Freileitung
- 12: Antrieb
- 14: Aufnahmeraum
- 16: Armatur
- 18: Befestigungsklemme
- 20: Montageeinheit
- 22: Energieerzeugungseinheit
- 24: Seilwinde
- 26: Basis
- 28: Seitenteil
- 30: Manipulatorhand
- 32: Längsführung
- 34: Trägerplatte
- 36: Greifer
- 38: Traggestell
- 40: Steuereinheit
- 42: Befestigungsplattform
- 44: Hebearm
- 46: Fluggerät
- 48: Greifarm
- 50: Schraubeinheit
- 52: Fangelement
- 56: Hilfsarmatur
- 58: Umlenkrahmen
- 60: Umlenkrolle
- 62: Einhängpunkt
- 64: Verbindungsleitung

## Patentansprüche

1. Leitungsfahrwagen (2) für eine Freileitung, insbesondere zur autonomen Montage von Armaturen (16), insbesondere an Seilen (8) eines Bündelleiters der Freileitung (10) mit
- einem Fahrgestell (4) das an der Freileitung (10) zur autonomen Fortbewegung aufgehängt werden kann, und das einen Antrieb (12) zur autonomen Fortbewegung umfasst,
- einer Montageeinheit (20), welche am Fahrgestell (4) befestigt ist und die eine Manipulatorhand (30) zur automatisierten Montage einer Armatur (16) an einem Seil (8) der Freileitung (10) aufweist,
- wobei die Montageeinheit (20) zumindest ein insbesondere elektrisches Stellelement aufweist und am Fahrgestell (4) weiterhin eine Energieversorgungseinheit (22) für das Stellelement angeordnet ist, oder eine Energieversorgung über eine Basisstation mittels einer Kabelverbindung erfolgt,
wobei der Leitungsfahrwagen (2) zu vollständig autonomen Montage der Armaturen (16) ohne Personenmitführung ausgebildet ist.

2. Leitungsfahrwagen (2) nach dem vorhergehenden Anspruch, bei dem es sich bei der Energieversorgungseinheit (22) um einen Stromgenerator insbesondere mit einem Verbrennungsmotor zur Erzeugung von elektrischer Energie handelt.

3. Leitungsfahrwagen (2) nach dem vorhergehenden Anspruch, bei dem ein gemeinsamer Verbrennungsmotor zum einen zur Erzeugung von elektrischer Energie und zum Anderen zum Antrieb einer hydraulischen Komponente, insbesondere einer Pumpe zum Erzeugen eins Hydraulikdrucks ausgebildet ist.

4. Leitungsfahrwagen (2) nach einem der vorhergehenden Ansprüche, bei dem es sich bei der Montageeinheit (20) um einen Mehrachsroboter handelt.

5. Leitungsfahrwagen (2) nach einem der vorhergehenden Ansprüche, wobei die Manipulatorhand (30) sowohl zum Positionieren der Armatur (16) an dem Seil (8) als auch zur Befestigung derselben an der vorgesehenen Position ausgebildet ist und hierzu eine Befestigungseinheit, insbesondere eine Schraubeinheit (50) zur Betätigung eines Befestigungsmechanismus (18) einer Befestigungsklemme der Armatur (16) aufweist.

6. Leitungsfahrwagen (2) nach einem der vorhergehenden Ansprüche, wobei das Fahrgestell (4) einen Aufnahmeraum (14) für einen Satz an Armaturen (16) aufweist, und die Montageeinheit (20) zum Greifen einer jeweiligen Armatur (16) aus diesem Satz an Armaturen (16) ausgebildet ist.

7. Leitungsfahrwagen (2) nach dem vorhergehenden Anspruch, wobei das Fahrgestell (4) eine Seilwinde (24) aufweist, über die jeweils der Satz an Armaturen (16) in den Aufnahmeraum (14) gebracht werden kann.

8. Leitungsfahrwagen (2) nach einem der vorhergehenden Ansprüche, der zum autonomen Anbringen an der Freileitung (10) ausgebildet ist, wahlweise durch eine beispielsweise am Fahrgestell (4) angebrachte Seilwinde (24), die zum Anheben des Leitungsfahrwagens (2) vom Boden an die Freileitung (10) eingesetzt wird oder indem der Leitungsfahrwagen (2) aus der Luft mit Hilfe eines autonomen Fluggerätes (46) angebracht wird.

9. Leitungsfahrwagen (2) nach dem vorhergehenden Anspruch, wobei eine Hilfsarmatur zum reversiblen Einhängen an die Freileitung vorgesehen ist, welche eine Umlenkrolle aufweist für ein Seil der Seilwinde.

10. Leitungsfahrwagen (2) nach einem der vorhergehenden Ansprüche, wobei die insbesondere als Mehrachsroboter ausgebildete Montageeinheit (20) außenseitig am Fahrgestell (4) an einer Befestigungsplattform (42) befestigt ist, wobei die Befestigungsplattform (42) bevorzugt oberhalb des Aufnahmeraums (14) der Armaturen (16) angebracht ist.

11. Leitungsfahrwagen (2) nach dem vorhergehenden Anspruch, wobei die Montageeinheit (20) ausgebildet ist zur seitlichen Entnahme einer jeweiligen Armatur (16) aus dem Fahrgestell und zur Positionierung an dem Seil (8) oberhalb des Fahrgestells (4).

12. Leitungsfahrwagen (2) nach einem der vorhergehenden Ansprüche, wobei mehrere Montagemodule mit jeweils einer Montageeinheit (20) vorgesehen sind, die jeweils spezifisch an unterschiedlichen Typen von Armaturen (16) angepasst sind und die austauschbar am Fahrgestell (4) befestigt werden können.

13. Leitungsfahrwagen (2) nach einem der vorhergehenden Ansprüche, wobei diesem eine Steuereinheit (40) zugeordnet ist, welche zur Erstellung eines Protokolls der Montage der Armaturen (16) ausgebildet ist und hierzu die Position der Armaturen (16) an der Freileitung bevorzugt GPS gestützt erfasst und protokolliert.

14. Leitungsfahrwagen (2) nach einem der vorhergehenden Ansprüche, der zusammen mit einem weiteren Leitungsfahrwagen (2) gekoppelt ist und mit diesem eine Gruppe für eine gemeinsame Montage von Armaturen an einer Freileitung ausgebildet sind, wobei sich die gekoppelten Leitungsfahrwägen (2) eine gemeinsame Komponente, beispielsweise die Energieversorgungseinheit (20) oder die Steuereinheit (40) teilen.

15. Montagesystem zur autonomen Montage von Armaturen (16) an Freileitungen (10) mit
- einem Leitungsfahrwagen (2) nach einem der Ansprüche 1 bis 14 insbesondere zur Befestigung von Feldabstandhaltern an Leiterseilen eines Bündelleiters sowie mit
- einem autonomen Fluggerät (46), wobei
-- das Fluggerät (46) zur autonomen Montage von Armaturen (16), insbesondere zur Befestigung von Schwingungsdämpfern oder Signalarmaturen an einem Seil (8) einer Freileitung (10) vorgesehen ist und das Fluggerät (46) einen Greifarm (48) aufweist, der die zu montierende Armatur (16) halten kann und der eine Befestigungseinheit, insbesondere eine Schraubeinheit (50) zur Betätigung eines Befestigungsmechanismus einer Befestigungsklemme (18) der Armatur (16) umfasst, und/ oder
-- als Transportgerät für die Armaturen (16) ein autonomes Fluggerät (46) und für die Montage der Armaturen der Leitungsfahrwagen oder ein weiteres Fluggerät mit einer Montageeinheit (20) vorgesehen ist.
